# EUROPEAN PATENT APPLICATION

(11) **EP 2 447 548 A1**
(43) Date of publication of application: **02.05.2012**
(21) Application number: 10189267.7
(22) Date of filing: 28.10.2010
(51) Int. Cl.: F15D 1/12, B64C 21/10

(54) **Method of reducing the object-traveling resistance**

(71) Applicant: Lin, Zuei-Ling, Taipei City 10567 (TW)
(72) Inventor: Lin, Zuei-Ling, Taipei City 10567 (TW)
(74) Representative: Dossmann, Gérard

(57) **Abstract**

A method of reducing the object-traveling resistance includes the steps of forming a plurality of small cavities (31) on the whole or at least a portion of an object skin (20) by a non-destructive measure, and producing a plurality of small vortexes (33) at the object skin (20) to form a thin turbulent boundary layer (30) when a fluid (40) passes through the plurality of small cavities (31), for achieving an advantageous interference to a turbulence of the fluid (40) at the object skin (20), such that a portion of fluid (40) is not in contact with the object skin (20), and a viscous drag acting on the object skin (20) is reduced to extend a wake (41) and reduce a drag force of the wake (41). The aforementioned mechanism can reduce the object-traveling resistance to provide a faster traveling speed and a big moving power of the object (10).

## Description

The present invention generally relates to objects, and more particularly to a method of reducing the object-traveling resistance.

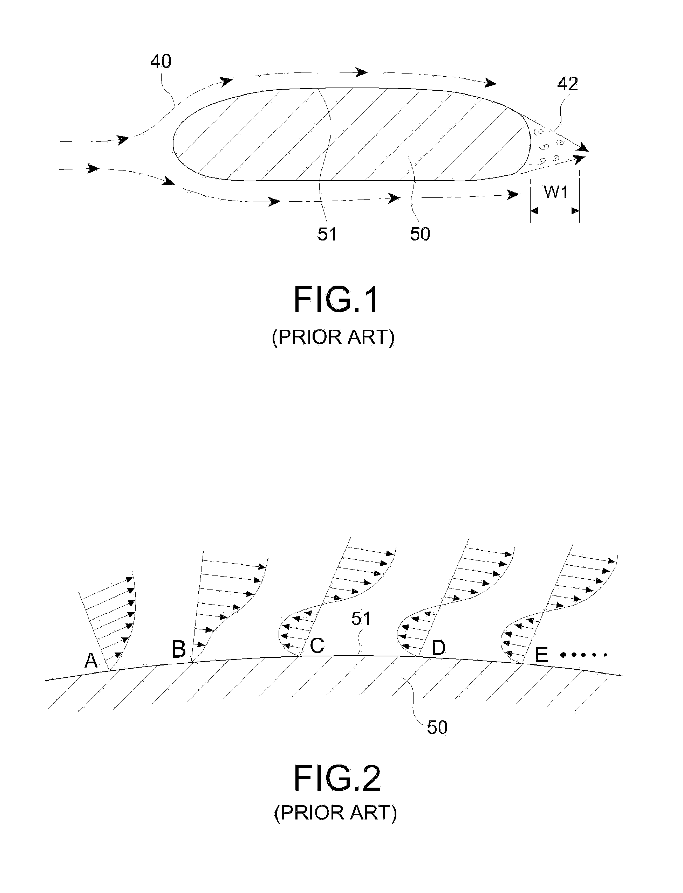

Objects including high speed rails, ships and airplanes travel with a very high speed, and conventional concepts believe that a smoother surface of these vehicles produces less frictional resistance with a fluid. However, the actual practice is not so. In FIGS. 1 and 2, if a fluid 40 is passed through Point A of an object skin 51 of an object 50 smoothly, the viscous drag acting on the object skin 51 obscures the traveling of the fluid 40 to produce a flow field boundary layer instantly, so as to affect and shift a flowing point of the fluid 40 backward, and the resistance produced by shifting the flowing point of the fluid 40 backward is called a reverse pressure which is also known as a resistance of the fluid. When the flowing point of the fluid 40 shifts to Point B, a separation of the boundary layer occurs, and turbulences are produced at flow field Points C, D and E, and thus the traveling speed of the objects will be retarded. Further, when the fluid is passed through the smooth object skin 51 of the object 50, a wake 42 of the object 50 produces a larger drag force of the wake 42 due to a shorter distance W1. As a result, a very strong resistance of the fluid resistance is produced.

In addition, projectiles such as bullets and cannon balls travel with a linear movement plus a circular movement, and thus the projectiles also have the same aforementioned drawback.

The term "Fluid" used in the following description of the present invention includes air and water.

The term "Traveling" used in the following description of the present invention includes a linear movement, a circular movement, and a linear movement plus a circular movement.

The term "Object" used in the following description of the present invention includes land, sea and air vehicles (involving their accessories such as hanging tools, hanging devices, machine tools, and parts) and projectiles. The vehicles include flight vehicles, ships and trains, etc, wherein the flight vehicles include rockets, aircraft bodies, aircraft wings, horizontal wings, vertical wings, unmanned aerial vehicle (UAV) bodies, aircraft wings, horizontal wings, vertical wings, helicopter bodies, helicopter empennages. The hanging tools, hanging devices, machine tools and parts of the flight vehicles include jet engine, jet engine pressurizing stator, jet engine turbine stator, jet engine by-pass, air spray nozzle, air spray nozzle inverted cone, air inlet, air inlet inverted cone, and the ships include hulls above the Plimsoll line, ship bridges, and hulls below the Plimsoll line, and the projectiles include bullets, cannon balls, missiles, and bombs.

The primary objective of the present invention is to provide a method of reducing the object-traveling resistance, and the method forms a plurality of small cavities on an object skin by a non-destructive measure, and produces a plurality of small vortexes at the object skin to form a thin turbulent boundary layer when a fluid is passed through the plurality of small cavities, so as to facilitate the interference acting on turbulences of the fluid at the object skin, such that a portion of fluid is not in contact with the object skin, and a viscous drag acting on the object skin is reduced. In this way, the fluid can pass through the object skin quickly, thereby achieving the effect of reducing the traveling resistance.

Another objective of the present invention is to use the aforementioned thin turbulent boundary layer that allows an advantageous interference acting on the fluid turbulence, such that the fluid elongates the wake along the object skin of the object, and the elongated wake can reduce the drag force of the wake of the object.

With the small vortexes, the turbulent boundary layer and the elongated wake, the traveling resistance of an object can be reduced effectively to provide a faster traveling speed and a higher power.

Besides the application for the object skin of a vehicle, the present invention can also be applied to the object skin of a projectile particularly for a bullet and a cannon ball traveling in a linear movement plus a circular movement, and the same principle is applied to achieve the effect of reducing the traveling resistance, but the speeds of both linear movements and circular movements are very fast, so that the efficiency of reducing the traveling resistance is higher.

Since the present invention adopts a non-destructive measure, the surface of the object skin will remain unchanged, and no damage will occur at the object skin. The invention not only provides a quick and convenient way of reducing the traveling resistance, but also protecting the structure of the object from damages or metal fatigues. The invention also provides a safety use and achieves the effects of a faster traveling speed and a larger power.

The accomplishment of this and other objects of the invention will become apparent from the following descriptions and its accompanying figures of which:
FIG. 1 is a schematic view showing a flow of a fluid on a surface of a conventional object;
FIG. 2 is a schematic view of a process of separating a fluid from a surface of a conventional object;
FIG. 3 is a schematic view of forming small cavities of the present invention;
FIG. 4 is a cross-sectional view of forming a turbulent boundary layer of the present invention;
FIG. 5 is an enlarged view of a portion of FIG. 4;
FIG. 6 is a schematic view of comparing air flows of a conventional object with an object of the present invention;
FIG. 7 is a schematic view of comparing processes of separating air of a conventional object with an object of the present invention;
FIG. 8 is a schematic view of applications used in vehicles in accordance with the present invention; and
FIG. 9 is a schematic view of applications used in projectiles in accordance with the present invention.

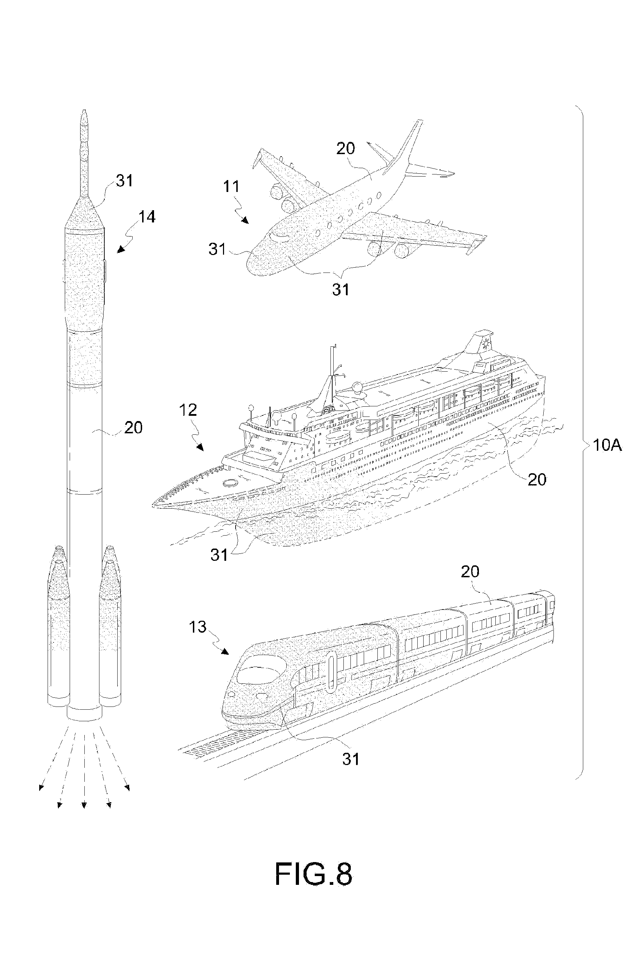

With reference to FIG. 8 for an object 10 including a land, sea, or air vehicle 10A, the object 10 includes a flight vehicle 11 (an airplane, a helicopter, etc), a ship 12, a train 13 or a rocket 14, etc. The object also includes a hanging tool or article, and a jet engine hanged onto the vehicle 10A and a ship including a hull above Plimsoll line, a ship bridge, and a hull below Plimsoll line, etc.

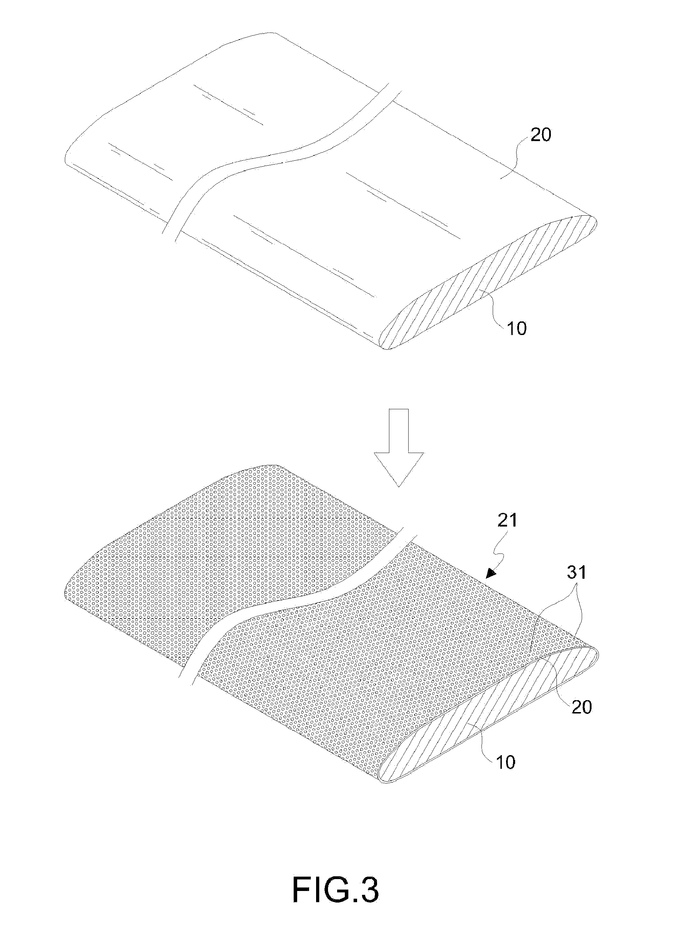

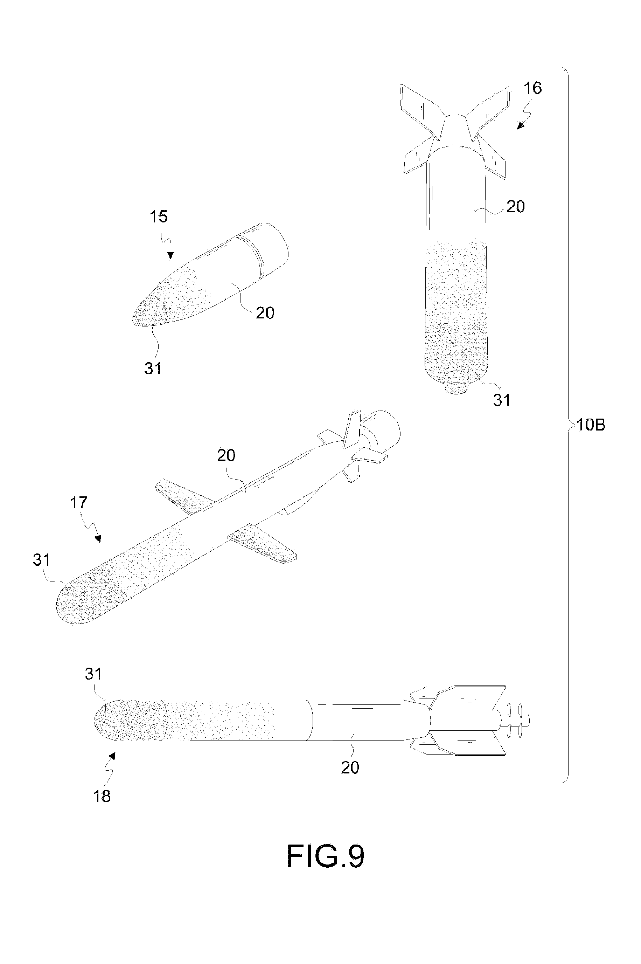

With reference to FIG. 9 for an object 10 of the present invention, the object 10 includes a land, sea, or air projectile 10B such as a bullet 15, a bomb 16, a missile 17 and a torpedo 18, etc. The foregoing object 10 produces frictional resistance between an object skin of the object 10 and a fluid (air and water), regardless of traveling in a linear movement or a linear movement plus a circular movement. Therefore, the present invention uses an object skin 20 of the vehicle 10A or projectile 10B as a design for reducing the traveling resistance, and the projectile 10B such as a bullet and a cannon ball travels in a linear movement plus a circular movement, and the principle of reducing the resistance is the same. A preferred embodiment of the present invention as shown in FIGS. 3 to 7 is described as follows:

In this preferred embodiment, an object skin 20 of an object 10 is disclosed, and a plurality of small cavities 31 is formed on the whole or at least a portion of the object skin 20, such that when a fluid 40 is passed through the plurality of small cavities 31, a plurality of small vortexes 33 is produced at the object skin 20, and the plurality of small vortexes 33 produces a thin turbulent boundary layer 30 on the object skin 20 to achieve an advantageous interference acting on a fluid turbulence at the object skin 20 and separate the fluid 40 from a portion of the object skin 20 to reduce the viscous drag of the fluid 40 acting onto the object skin 20. In this way, the fluid 40 can pass through the object skin 20 of the traveling object quickly, thereby achieving the effect of reducing the traveling resistance. The aforementioned turbulent boundary layer 30 permits an advantageous interference acting on the fluid turbulence, such that the fluid 40 pulls a wake 41 along the object skin 20 to a longer distance W2, and the elongated wake can reduce the drag force of the wake of the obj ect 10. Therefore, the present invention combines with the three foregoing mechanisms (including the small vortexes 33, the turbulent boundary layer 30 and the elongated wake 41) to reduce the object-traveling resistance effectively, so as to achieve a faster speed and a bigger power of the object.

The small cavities 31 of the object skin 20 of the present invention can be formed by a non-destructive measure, such that the structure of an object will not be changed or damaged to assure the safety of the object, and objects exiting the factory can use the present invention easily.

In one of the feasible embodiments for forming the plurality of small cavities 31 on the object skin 20 by the non-destructive measure in accordance with the present invention, methods including coating, printing, sticker posting, or a combination of the above can be used to attach to a thin layer 21 formed by the object skin 20, wherein the thin layer has a thickness of 0.001 mm to several mm. In this preferred embodiment, the thin layer 21 is a paint disposed on the object skin 20 by coating, or together with screen printing. The method is not limited to those mentioned above only, but the thin layer 21 can also be a thin layer sticker made of a temperature difference and water resisting film, formed with a plurality of small cavities 31 in advance and adhered onto the object skin 20.

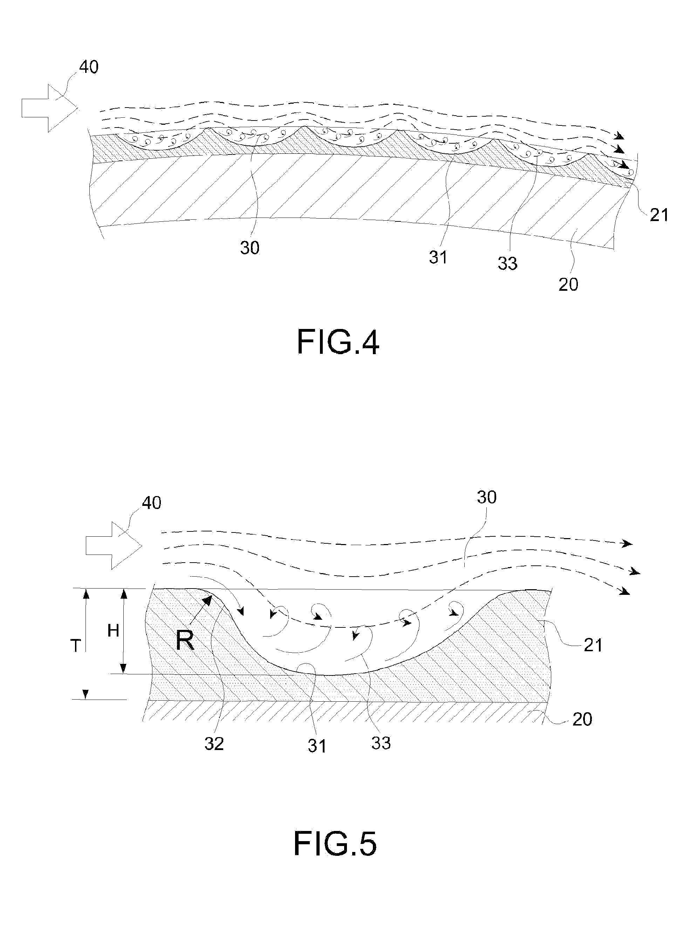

With reference to FIGS. 4 and 5, a plurality of small cavities 31 in a predetermined geometric shape such as a strip-shape, a polygonal shape, a circular shape, and an elliptical shape or other geometric shapes is formed on a surface of the thin layer 21, and the small cavities 31 of a preferred embodiment have a concave arc shape with a lower middle, and the concave arc shaped small cavities can reduce reflected waves of a radar. The concave arc shaped front edge facing towards the fluid 40 includes a circular shape 32 that allows an air flow 40 to be introduced into the small cavities 31 smoothly to form a plurality of small vortexes 33 in the cavities 31.

Moreover, the plurality of small cavities 31 has a depth of 0.001 mm∼10 mm and an area of 0.001 mm²∼ 100 mm², and a higher density of small cavities 31 provides a better effect of reducing the resistance. In a preferred embodiment, an interval between two adjacent small cavities is not greater than the maximum diameter or width of the small cavities 31, such that the small cavities are distributed densely and have a depth of 0.001 mm∼10 mm and an area of 0.001 mm²∼100 mm², but the present invention is not limited to aforementioned arrangements only.

Therefore, the plurality of small vortexes 33 formed in the plurality of small cavities 31 respectively is changed from points to a plane to form a turbulent boundary layer 30 naturally. As to the width of the small cavities 31, the width, depth and area of the cavities can be designed according to the traveling speed or the operating speed of the object and the surface area of the object skin 20 to optimize the turbulent boundary layer 30 created thereby.

Further, in FIG. 5, the plurality of small cavities 31 of the present invention has a depth H not greater than the thickness T of the thin layer 21. For example, if the thickness T of the thin layer 21 is 2mm, then the maximum depth H of the small cavities 31 is from 1.0 mm to less than 2.0mm, and preferably 1.5mm∼1.8mm, but not limited to such arrangements only. As a result, most of the areas at the bottom of the thin layer 21 are combined with the object skin 20 to improve the adhesiveness.

In addition, the thin layer 21 is fixed onto the object skin 20 by a coating/printing or sticker posting method. If the coating/printing method is adopted, the small cavities 31 are formed at the same time with the paint printing process. If the sticker posting method is adopted, the small cavities 31 are formed on the sticker in advance, and then the sticker is stuck onto the object skin 20. As to the present existing science and technologies, the aforementioned measures of the present invention can be implemented. For example, a sticker with a colored pattern made by the 3M Company is stuck onto the airplane bodies of the China Airlines. However, such sticker is different from a general sticker, since the sticker has to bear a high temperature (over 30°C) before a take-off and a sudden drop of temperature (down to -60°C) at approximately 40,000 ft. in the air within a few minutes after the take-off as well as a drastic change of pressure. In addition, strong UV lights in the air, heavy rains in bad weathers, or even snow may roll up or peel off the sticker, such that a protective film must be coated and dried before the sticker is applied onto the airplane body, and finally the sticker is sealed with the airplane body by an edge sealing agent. At present, stickers can be stuck on an airplane body successfully, so that the thin layer 21 formed by a non-intrusive and non-destructive method according to the present invention can be implemented, and the plurality of small cavities 31 formed on the object skin 20 can be implemented. In addition, the paint sprayed or printed on the object skin 20 to form the plurality of small cavities 31 can be implemented without any problems.

The plurality of small cavities 31 formed on the object skin 20 in accordance with the present invention by the aforementioned thin layer 21 also includes a manufacture/formation process on a surface of a sheet material before the object skin is assembled. For example, methods of roll-pressing or stamping a metal sheet, boring or casting a thick metal plate, and using a composite material for demolding can be used for forming the plurality of small cavities 31 directly on the sheet material, and the small cavities 31 can be formed on a surface of the sheet material only, so that the structure and strength of the sheet material will not be destroyed. As a result, the plurality of small cavities 31 as well as the plurality of small vortexes 33 can be formed naturally to create a thin turbulent boundary layer 30 when the sheet material is combined to produce the object skin 20, and its characteristics and effects are the same as the aforementioned method, and thus will not be repeated here.

With the technical characteristics of the present invention as disclosed above, the present invention has the following advantages and effects:
1. When the fluid 40 is passed through the plurality of small cavities 31, the turbulent boundary layer 30 is formed on the object skin 20 naturally, so that it is not necessary to have a turbulator to achieve the effect of interference to the air current at the surface, and it is a convenient, efficient and effective method.

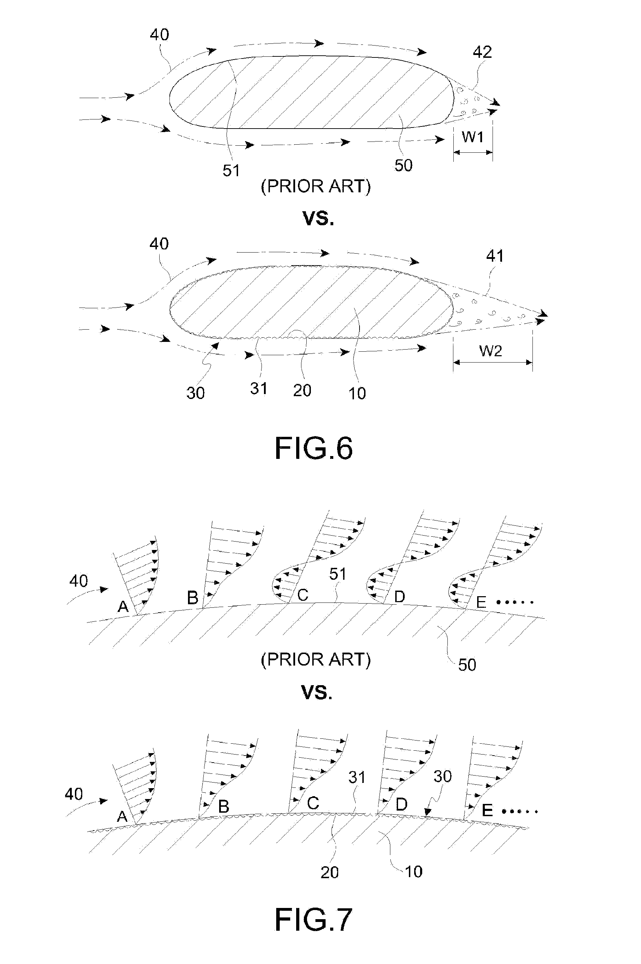

2. In FIG. 6, the lower figure shows the fluid flow of an object of the present invention and the upper figure shows the fluid flow of an object of the prior art, and these figures compare the present invention with the prior art. The present invention can reduce the viscous drag of the fluid 40 exerted onto the object skin 20 and elongate the wake 41. In other words, the present invention changed the conventional wake 42 from a shorter distance W1 and extended it backward to a longer distance W2, so as to achieve the effect of reducing the drag force of the wake 41 of the object skin. The invention not only increases the speed, but also reduces the consumption of energy. As to the projectile 10B such as the bullet and the cannon ball traveling with both linear and circular movements, the principle of reducing their traveling resistance is the same. Since the linear and circular movements of the bullet and the cannon ball have a very fast speed, the efficiency of reducing the traveling resistance is higher.
3. In FIG. 7, the lower figure shows a separation process of the fluid from the object during the use of the present invention, and the upper figure shows a separation process of the fluid from the obj ect during the use of prior art as shown in FIG. 2, and these figures compare the present invention with the prior art. In the prior art, when the fluid is passed through the object skin 51 of the object 50 and shifted from Point A to Point B, a separation point occurs at the boundary layer, and then turbulences are produced at flow field Points C, D and E after Point B. On the other hand, when the fluid of the present invention is passed through a surface of the object 10, the fluid is situated at flow field Point A first, and soon flow field Point B shows up in the boundary layer on the object skin 20 of the object 10 shown as the lower figure of FIG. 7. Since the object skin 20 of the present invention has a plurality of small cavities 31 provided for forming the turbulent boundary layer 30, therefore the fluid flowing to flow field Points C, D, and E after Point B will not produce a turbulence (as produced by the fluid of the prior art and shown in the upper figure of FIG. 7), so as to reduce the traveling resistance of the object 10 effectively.
4. The present invention adopts a non-destructive measure to form the plurality of small cavities in order to create the turbulent boundary layer 30, and such arrangement not only provides a safety use, but also provides a quick, convenient and cost-effective application.

Many changes and modifications in the above-described embodiments of the invention can, of course, be carried out without departing from the scope thereof. Accordingly, to promote the progress in science and the useful arts, the invention is disclosed and is intended to be limited only by the scope of the appended claims.

## Claims

1. A method of reducing the object-traveling resistance, comprising the steps of:
a) forming a plurality of small cavities (31) on the whole or at least a portion of an object skin (20) by a non-destructive measure; and
b) producing a plurality of small vortexes (33) at the object skin (20) to form a thin turbulent boundary layer (30) when a fluid (40) passes through the plurality of small cavities (31), for achieving an advantageous interference to a turbulence of the fluid (40) at the object skin (20), such that a portion of fluid (40) is not in contact with the object skin (20), and a viscous drag acting on the object skin (20) is reduced to extend a wake (41) and reduce a drag force of the wake (41).

2. The method of reducing the object-traveling resistance as recited in claim 1, wherein the plurality of small cavities (31) is in a predetermined shape selected from the collection of a strip shape, a polygonal shape, a circular shape, an elliptical shape and other geometric shapes, and the small cavities (31) are in a concave arc shape having a lower middle.

3. The method of reducing the object-traveling resistance as recited in claim 2, wherein the plurality of small cavities (31) are densely distributed, and each small cavity (31) has a depth of 0.001 mm∼10 mm and an area of 0.001 mm²∼100 mm².

4. The method of reducing the object-traveling resistance as recited in claim 3, wherein the plurality of small cavities (31) of the object skin (20) attached and fixed onto a thin layer (21) of the object skin (20) by a method selected from the collection of coating, printing, sticker posting, and a combination of the above, and the plurality of small cavities (31) formed by the thin layer (21) has a maximum height (H) not exceeding the thickness (T) of the thin layer (21).

5. The method of reducing the object-traveling resistance as recited in claim 4, wherein the plurality of small cavities (31) of the object skin (20) include a thin layer (21) formed on the object skin (20) directly by coating or together with screen printing with paint.

6. The method of reducing the object-traveling resistance as recited in claim 4, wherein the plurality of small cavities (31) of the object skin (20) are formed on a surface of a thin layer sticker made of a temperature difference and water resisting film first, and then the thin layer (21) with the plurality of small cavities (31) is attached onto the object skin (20).

7. The method of reducing the object-traveling resistance as recited in claim 3, wherein the plurality of small cavities (31) of the object skin (20) is manufactured and formed on a surface of the sheet material before the object skin (20) is assembled.

8. The method of reducing the object-traveling resistance as recited in claim 7, wherein plurality of small cavities (31) of the object skin (20) are manufactured and formed directly on the sheet material by a method selected from the collection of metal sheet rolling or stamping, thick metal plate boring or casting, and composite material demolding.
